# EUROPÄISCHE PATENTSCHRIFT

(11) **EP 0 549 561 B1**
(45) Veröffentlichungstag und Bekanntmachung des Hinweises auf die Patenterteilung: **29.05.1996**
(21) Anmeldenummer: 92890270.9
(22) Anmeldetag: 23.12.1992
(51) Int. Cl.: B27B 17/02, B23D 57/00

(54) **Führungsschiene für eine Motorsäge**
Guide bar for a motorized saw
Barre de guidage pour une scie motorisée

(30) Priorität: 24.12.1991 DE 9116053 U; 31.03.1992 AT 655/92
(43) Veröffentlichungstag der Anmeldung: 30.06.1993
(73) Patentinhaber: ETABLISSEMENT EUROLIGNA MASCHINEN AGGREGATE INDUSTRIEBEDARF, FL-9490 Vaduz (LI)
(72) Erfinder: Dolp, Johann, A-3375 Krummnussbaum (AT)
(74) Vertreter: Puchberger, Peter, Dipl.-Ing.

(56) Entgegenhaltungen:
- WO-A-85/02362
- WO-A-86/04539
- DE-A- 3 607 010
- DE-A- 3 831 110
- US-A- 2 731 048
- US-A- 3 621 894

## Beschreibung

Die Erfindung richtet sich auf eine Führungsschiene für eine Motorsäge mit umlaufenden Schneidelement, wobei im Schienenrandbereich Führungen für das umlaufende Schneidelement vorgesehen sind.

Es sind Motorsägen mit unterschiedlichen umlaufenden Schneidelementen bekannt, z.B. Motorkettensägen, bei denen das Schneidelement als Sägekette ausgebildet ist, die um eine Schiene umläuft. Darüber hinaus sind Sägen bekannt, bei denen das Schneidelement von einem Sägeband bzw. einem Sägeseil gebildet ist, das ebenfalls um eine Schiene umläuft.

Problematisch bei derartigen Motorsägen sind Einstecharbeiten, bei denen derartige Motorsägen zum Rückschlagen neigen, so daß die Handhabung erschwert wird bzw. auch zur Zerstörung des Schneidwerkzeuges führen kann. Zur Lösung dieses Problems ist bereits eine Schiene für eine Motorkettensäge vorgeschlagen worden (EP 0 387 562 A1), bei der ein vorderes abgeschrägtes asymmetrisches Einstechende bogenförmig ausgebildet ist und wobei ein bogenförmiger Einlaufabschnitt und ein bogenförmiger Auslaufabschnitt vorgesehen sind und wobei eine ganz spezielle geometrische Ausgestaltung und Zuordnung dieser bogenförmigen Abschnitte vorgesehen ist. Dabei läuft die Sägekette entsprechend geführt eng an der Schiene anliegend entsprechend bogenförmig um das Einstechende. Mit dieser bekannten Schiene sollen zwar rückschlagfreie Einstecharbeiten mit geringem Kraftaufwand möglich sein, von Nachteil bei dieser bekannten Lösung ist jedoch, daß die Herstellung dieser exakten geometrischen Ausgestaltung des Einstechendes der Schiene aufwendig ist und daß weiters die Schiene nur für Motorkettensägen geeignet ist, nicht jedoch für Sägen mit Sägebändern bzw. Sägeseilen.

Das Dokument WO 85/02362 zeigt, daß es auf einfache Weise möglich ist, Motorsägen mit Schneidelementen in Ketten- oder Bandform für Einstecharbeiten und normale Schneidarbeiten einzusetzen, wobei eine gute Führung für das Schneidelement gewährleistet ist und der Rückschlag möglichst klein gehalten wird.

Dabei sind an Umlenkpunkten für das Schneidelement Führungsrollen vorgesehen.

Damit ist es auf einfache Weise möglich, Einstecharbeiten und normale Schneidarbeiten nach Erstellung eines Einstiches durchzuführen. Dabei kann das Schneidelement durch die freie Aufhängung des Schneidelementes zwischen den Führungselementen in den beiden Randzonen des abgeschrägten Einstechendes beim Aufsetzen der Motorsäge auf die einzustechende Fläche nachgeben, d.h. nach hinten ausweichen, da das Schneidelement in diesem Bereich zwischen den Führungselementen nicht an der Führungsschiene anliegt. Dabei läßt sich die Nachgiebigkeit durch die Vorspannung des Schneidelementes einstellen. Durch die Führungsrollen ist eine gute Führung gewährleistet und ein enger Radius für die Umlenkung des Schneidelementes gegeben, wodurch der Rückschlag minimiert wird.

Für Motorkettensägen ist es bekannt, daß bei einem als Sägekette ausgebildeten Schneidelement die Führungselemente als Kettenräder ausgebildet sind, die in einer umlaufenden Nut des Schienenrandbereiches angeordnet sind. Die Kettenräder dienen dabei sozusagen als Umlenkräder und bewirken eine Umlenkung der umlaufenden Sägekette derart, daß die Sägekette im Einstechbereich frei zwischen den Kettenrädern gespannt ist und nicht an der Führungsschiene anliegt.

Es kann vorteilhaft vorgesehen sein, daß der Schienenrandbereich zwischen den Kettenrädern konkav ausgebildet ist. Mit dieser Ausbildung der Führungsschiene wird zuverlässig vermieden, daß die Sägekette im Bereich zwischen den Kettenrädern in Kontakt mit dem Schienenrandbereich kommen kann, was ansonsten zur Zerstörung der Kette beim Einstechen führen könnte.

Konstruktiv besonders einfach ist es, wenn die Führungsrollen über den Schienenrandbereich hinausragen. Es ist dann nicht erforderlich, den Schienenrandbereich zu verändern, um einen Abstand des Sägebandes vom Schienenrandbereich im Bereich zwischen den Führungsrollen zu gewährleisten.

Zum Zwecke der Auswechselbarkeit der Umlenkräder und der zugehörigen Lagerträger und Schienenbereiche sieht die Erfindung vor, die Umlenknase aus zwei Platten zu bilden, die mit einer gemeinsamen Hauptplatte der Führungsnase verbunden sind.

In einer Ausführungsform sind die Führungsrollen zwischen zwei etwa dreieckförmigen Platten jeweils in einem Eckbereich der Platten angeordnet, wobei die dreieckförmigen Platten mit einer gemeinsamen Hauptplatte verbunden sind, die im freien Eckbereich zwischen den beiden Platten angeordnet ist. In einer weiteren Ausführung sind T-förmige Platten vorgesehen.

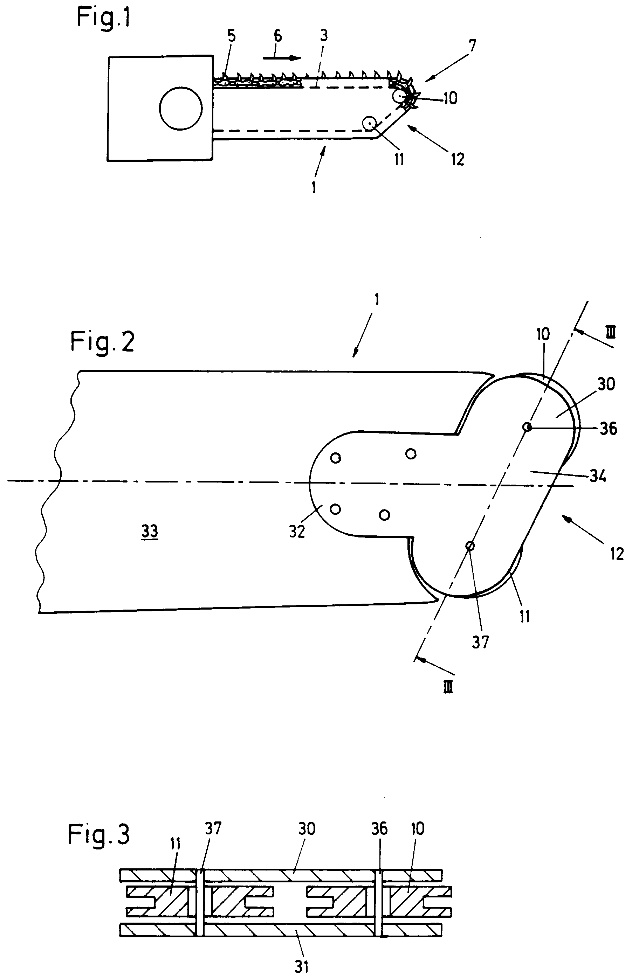

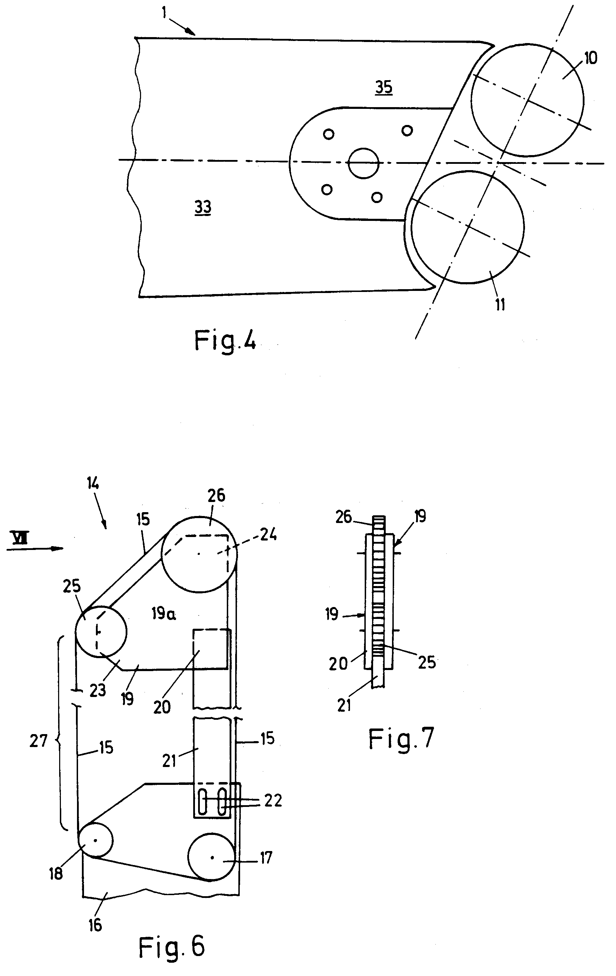

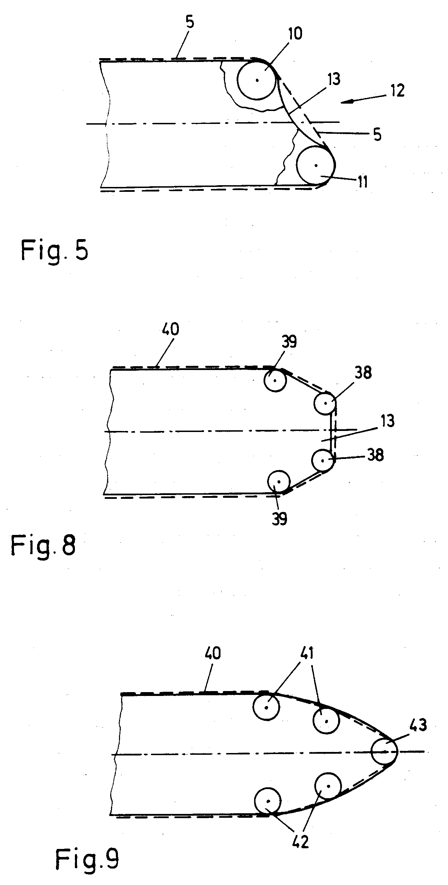

Die Erfindung ist nachstehend anhand der Zeichnung beispeilsweise näher erläutert. Diese zeigt jeweils in schematischer Darstellung in Fig.1 eine Draufsicht auf eine erfindungsgemäße Führungsschiene für eine Motorkettensäge, Fig.2 eine vergrößerte Darstellung des Einstechendes der Führungsschiene nach Fig.1 bei abgenommener Kette. Fig.3 ist ein Schnitt nach der Linie III-III in Fig.2 und Fig.4 zeigt schematisch den Aufbau des Schienenendes. Fig.5 zeigt eine erfindungsgemäße Führungsschiene für eine Motorkettensäge in einer anderen Ausführungsform und Fig.6 zeigt eine Führungsschiene für ein Sägeband. Fig.7 ist eine Teilseitenansicht gemäß Pfeil VII in Fig.6. Die Fig.8 und 9 zeigen weitere Möglichkeiten für die Ausbildung des Einstechendes der Führungsschiene mit vier bzw. fünf Führungsrollen.

Eine übliche, z.B. aus EP 0 387 562 A1 bekannte Motorsäge weist einen Antriebsmotor und eine Schienenaufnahme auf, in die eine erfindungsgemäße Führungsschiene eingeführt und arretiert werden kann, diese Führungsschiene ist allgemein mit 1 bezeichnet.

Die Führungsschiene 1 ist in ihrem Schienenrandbereich mit einer umlaufenden Führungsnut 3 versehen, die zur Führung einer Sägekette 5 dient, in dem deren Treibglieder mit Gleitsitz in der Führungsnut 3 liegen und deren Kettenglieder sich auf der Umfangsfläche der Führungsschiene 1 abstützen. Die Sägekette 5 läuft über ein nicht dargestelltes, innerhalb der Motorsäge angeordnetes vom Motorantrieb angetriebenes Kettenrad, daß die Sägekette 5 in Richtung des Pfeiles 6 (Fig.1) in Umlauf setzt.

Am vorderen freien Einstechende 7 ist die Schiene 1 asymmetrisch abgeschrägt und weist an den Umlenkpunkten jeweils ein Kettenrad 10,11 auf, das jeweils in der Führungsnut angeordnet ist. Dabei sind die Kettenräder 10, 11 derart angeordnet, daß die Kette im Bereich 12 zwischen den Kettenrädern 10,11 geradlinig gespannt ist, und zwar abgeschrägt im Hinblick auf die Längsachse der Führungsschiene.

Wie man den Detaildarstellungen des Einstechendes in den Figuren 2,3 und 4 entnehmen kann sind die Kettenräder 10,11 mit ihren Achsen 36,37 an je einem Schenkel 34 zweier T-förmiger Platten 30,31 angelenkt. Die Lagerung der Kettenräder 10,11 auf den Achsen 36,37 erfolgt vorzugsweise über eine Nadellager.

Die anderen Schenkel 32 der T-förmigen Platten 30,31 sind in Ausnehmungen 35 liegend mit einer gemeinsamen Hauptplatte 33 verbunden. Im Bereich 12 ragen die Kettenräder 10,11 über die T-förmigen Platten 30,31, sodaß die Sägekette in diesem Bereich 12 freiläuft und dadurch bei Belastung nachgeben kann, was den Rückschlag vermindert.

Fig.5 zeigt eine andere Ausführungsform des Einstechendes, bei der zum freien Umlauf der Sägekette 5 im Bereich 12 der Schienenrandbereich 13 gegenüber der Sägekette 5 zurückversetzt ist, indem er konkav ausgebildet ist.

Wird nun die Motorsäge mit der Schiene 1 zum Einstechen auf eine einzustechende Fläche aufgesetzt, so kann die Sägekette 5 im Bereich 12 zwischen den Kettenrädern 10,11 leicht nachgeben, wobei die Größe der Nachgiebigkeit von der Vorspannung der Kette 5 abhängt und somit entsprechend für den jeweiligen Einsatzfall eingestellt werden kann.

In den Fig.6 und 7 ist ein anderes Ausführungsbeispiel der Erfindung dargestellt, nämlich eine Führungsschiene 14 für eine Motorsäge mit einem Sägeband 15 als Schneidelement und einem abgeschrägten Einstechende.

Von der Motorsäge ist ein Teil des Gehäuses 16 dargestellt, mit einer Antriebsrolle 17 und einer Umlenkrolle 18, um die jeweils das Sägeband 15 läuft und von der Antriebsrolle 17 angetrieben wird.

Die Führungsschiene 14 selbst weist zwei etwa dreieckförmige Platten 19 auf, zwischen denen in einem Eckbereich 20 eine Hauptplatte 21 der Führungsschiene 14 befestigt ist, z.B. durch Verschweißen. Diese Hauptplatte 21 weist an ihrem freien Ende Anschlußelemente, z.B. Langlochführungen 22 zur Befestigung an der Motorsäge auf.

In den beiden anderen Eckbereichen 23 und 24 der dreieckförmigen Platten 19 sind zwischen den beiden Platten 19 drehbar jeweils Führungsrollen 25, 26 angeordnet, um die das Sägeband 15 läuft. Dabei ist die Anordnung der Führungs- bzw. Umlenkrollen 25, 26 so getroffen, daß die Führungsrollen über die jeweiligen Eckbereiche der Platten 19 hinausragen, derart, daß das Sägeband 15 im Bereich zwischen den Führungsrollen 25, 26 auf Abstand vom Randbereich 19a der Schienenplatten 19 gehalten ist und nicht an diesen zur Anlage kommen kann.

Aufgrund dieser Ausbildung kann das Sägeband 15 bei Einstecharbeiten beim Aufsetzen auf die einzustechende Fläche nachgeben, ohne zur Anlage an den Randbereich 19a zu gelangen, so daß eine Beschädigung des Sägebandes 15 vermieden wird. Nach dem Einstechen kann dann in üblicher Weise die Schnittbewegung mit dem Bereich 27 des Sägebandes 15 ausgeführt werden.

Das Sägeband 15 kann beispielsweise als Diamantseil ausgeführt sein, wobei dann die entsprechende Säge als Mauersäge eingesetzt werden kann, um z.B. zur Mauertrockenlegung Fugen im Mauerwerk einzubringen.

Die Figuren 8 und 9 zeigen weitere Ausführungsmöglichkeiten für das Einstechende der erfindungsgemäßen Führungsschiene. In Fig.8 sind vier Führungsrollen 38,39 trapezförmig am vorderen Ende angeordnet, wobei die vorderen Führungsrollen 38 wiederum über den Schienenrandbereich 13 hinausragen und so das Schneidelement 40 frei zwischen diesen beiden Führungsrollen gespannt ist ohne die Führungsschiene zu berühren.

Ebenso wie in Fig. 8 sind auch in Fig.9 die Führungsrollen 41,42,43 symmetrisch zur Längsache der Führungsschiene angeordnet und zwar entlang zweier symmetrischer Bogenlinien, die sich in jenem Punkt schneiden an dem die Führungsrolle 43 angelenkt ist.

## Patentansprüche

1. Führungsschiene für eine Motorsäge mit einem umlaufenden Schneidelement, wobei im Schienenrandbereich Führungen für das umlaufende Schneidelement und an Umlenkpunkten für das Schneidelement (5, 15, 40) Führungsrollen (10, 11, 25, 26, 38, 39, 41-43) vorgesehen sind und das vordere Einstechende der Führungsschiene (1) wenigstens zwei Führungsrollen (10, 11, 25, 26, 38, 39, 41-43) aufweist, wobei das vordere Einstechende asymmetrisch abgeschrägt ausgebildet ist und die Führungsrollen (10, 11, 25, 26) gegeneinander versetzt angeordnet sind, dadurch gekennzeichnet, daß die Führungsrollen (25, 26) zwischen zwei etwa dreieckförmigen Platten (19) jeweils in einem Eckbereich (23, 24) der Platten (19) angeordnet sind, wobei die dreieckförmigen Platten (19) mit einer gemeinsamen Hauptplatte (21) verbunden sind, die im freien Eckbereich (20) zwischen den beiden Platten (19) angeordnet ist.

2. Führungsschiene für eine Motorsäge mit einem umlaufenden Schneidelement wobei im Schienenrandbereich Führungen für das umlaufende Schneidelement und an Umlenkpunkten für das Schneidelement (5, 15, 40) Führungsrollen (10, 11, 25, 26, 38, 39, 41-43) vorgesehen sind und das vordere Einstechende der Führungsschiene (1) wenigstens zwei Führungsrollen (10, 11, 25, 26, 38, 39, 41-43) aufweist, wobei das vordere Einstechende asymmetrisch abgeschrägt ausgebildet ist und die Führungsrollen (10, 11, 25, 26) gegeneinander versetzt angeordnet sind, dadurch gekennzeichnet, daß die Führungsrollen (10, 11) zwischen zwei T-förmigen Platten (30, 31) gelagert sind, von denen jeweils ein Schenkel (32) mit einer gemeinsamen Hauptplatte (33) verbunden ist und der andere schräg angeordnete Schenkel (34) die Führungsrollen (10, 11) trägt.

3. Führungsschiene nach eine der Ansprüche 1 oder 2, dadurch gekennzeichnet, daß der Schienenrandbereich (13) zwischen den Führungsrollen (10, 11, 25, 26, 38, 39) gegenüber dem Schneidelement wie an sich bekannt zurückversetzt ausgebildet ist.

4. Führungsschiene nach einem der Ansprüche 1 bis 3, dadurch gekennzeichnet, daß bei einem als Sägekette (5) ausgebildeten Schneidelement die Führungsrollen (10, 11) wie an sich bekannt als Kettenräder ausgebildet sind, die in einer umlaufenden Nut (3) des Schienenrandbereiches angeordnet sind.

5. Führungsschiene nach Anspruch 4, dadurch gekennzeichnet, daß der Schienenrandbereich (13) zwischen den Kettenrädern (10, 11) wie an sich bekannt konkav ausgebildet ist.

## Claims

1. A guide bar for a motorised saw having a rotating cutting element, guides being provided in the bar edge zone for the rotating cutting element and guide rollers (10, 11, 25, 26, 38, 39, 41 - 43) being provided at reversal points for the cutting element (5, 15, 40), the front insertion end of the guide bar (1) having at least two guide rollers (10, 11, 25, 26, 38, 39, 41 - 43), the front insertion end being of asymmetrically bevelled construction and the guide rollers (10, 11, 25, 26) being disposed in an offset arrangement relatively to one another, characterised in that the guide rollers (25, 26) are disposed between two substantially triangular plates (19) each in a corner zone (23, 24) of said plates (19), the triangular plates (19) being connected to a common main plate (21) disposed in the free corner zone (20) between the two plates (19).

2. A guide bar for a motorised saw having a rotating cutting element, guides being provided in the bar edge zone for the rotating cutting element and guide rollers (10, 11, 25, 26, 38, 39, 41 - 43) being provided at reversal points for the cutting element (5, 15, 40), the front insertion end of the guide bar (1) having at least two guide rollers (10, 11, 25, 26, 38, 39, 41 - 43), the front insertion end being of asymmetrically bevelled construction and the guide rollers (10, 11, 25, 26) being disposed in an offset arrangement relatively to one another, characterized in that the guide rollers (10, 11) are mounted between two T-shaped plates (30, 31), one limb (32) of each of which is connected to a common main plate (33) and the other inclined limb (34) carries the guide rollers (10, 11).

3. A guide bar according to claim 1 or 2, characterised in that the bar edge zone (13) between the guide rollers (10, 11, 25, 26, 38, 39) is set back from the cutting element as known per se.

4. A guide bar according to any one of claims 1 to 3, characterised in that in the case of a cutting element in the form of a saw chain (5) the guide rollers (10, 11) are constructed as chain wheels in manner known per se, and are disposed in a peripheral groove (3) of the bar edge zone.

5. A guide bar according to claim 4, characterised in that the bar edge zone (13) between the chain wheels (10, 11) is of concave construction as known per se.

## Revendications

1. Rail de guidage pour une tronçonneuse avec un élément de coupe tournant, où dans la zone de bord du rail sont prévus des guidages pour l'élément de coupe tournant et à des points de renvoi de l'élément de coupe (5, 15, 40) des rouleaux de guidage (10, 11, 25, 26, 38, 39, 41-43), et l'extrémité avant en plongée du rail de guidage (1) présente au moins deux rouleaux de guidage (10, 11, 25, 26, 38, 39, 41-43), l'extrémité avant en plongée étant réalisée avec un biais asymétrique, et les rouleaux de guidage (10, 11, 25, 26) sont décalés les uns par rapport aux autres, caractérisé en ce que les rouleaux de guidage (25, 26) sont disposés entre deux plaques à peu près triangulaires (19) respectivement dans une zone angulaire (23, 24) des plaques (19), les plaques triangulaires (19) étant reliées à une plaque principale commune (21) qui est disposée dans la zone angulaire libre (20) entre les deux plaques (19).

2. Rail de guidage pour une tronçonneuse avec un élément de coupe tournant, où sont prévus dans la zone de bord du rail des guidages pour l'élément de coupe tournant et à des points de renvoi de l'élément de coupe (5, 15, 40) des rouleaux de guidage (10, 11, 25, 26, 38, 39, 41-43), et l'extrémité avant en plongée du rail de guidage (1) présente au moins deux rouleaux de guidage (10, 11, 25, 26, 38, 39, 41-43), l'extrémité avant en plongée étant réalisée avec un biais asymétrique et les rouleaux de guidage (10, 11, 25, 26) étant décalés les uns par rapport aux autres, caractérisé en ce que les rouleaux de guidage (10, 11) sont logés entre deux plaques en forme de T (30, 31) dont respectivement une branche (32) est reliée à une plaque principale commune (33) et dont l'autre branche disposée en biais (34) porte les rouleaux de guidage (10, 11).

3. Rail de guidage selon l'une des revendications 1 ou 2, caractérisé en ce que la zone de bord de rail (13) entre les rouleaux de guidage (10, 11, 25, 26, 38, 39) est réalisée, comme cela est connu en soi, pour être en retrait par rapport à l'élément de coupe.

4. Rail de guidage selon l'une des revendications 1 à 3, caractérisé en ce que dans un élément de coupe réalisé sous forme de chaîne à scier (5) les rouleaux de guidage (10, 11), comme cela est connu en soi, sont réalisés sous forme de roues à chaînes qui sont disposées dans une rainure (3) s'étendant tout autour de la zone de bord de rail.

5. Rail de guidage selon la revendication 4, caractérisé en ce que la zone de bord de rail (13) entre les roues à chaînes (10, 11), comme cela est connu en soi, est réalisée suivant une forme concave.
